(19)

**Europäisches Patentamt**
**European Patent Office**
**Office européen des brevets**

(11) **EP 4 538 140 B1**

(12) **EUROPEAN PATENT SPECIFICATION**

(45) Date of publication and mention
of the grant of the patent:
**08.04.2026 Bulletin 2026/15**

(21) Application number: **23203508.9**

(22) Date of filing: **13.10.2023**

(51) International Patent Classification (IPC):
**B60W 60/00** $^{(2020.01)}$    **G01S 19/14** $^{(2010.01)}$
**G01S 19/42** $^{(2010.01)}$    **G05D 1/248** $^{(2024.01)}$
G01S 19/41 $^{(2010.01)}$    G01S 19/43 $^{(2010.01)}$
G05D 105/20 $^{(2024.01)}$    G05D 109/10 $^{(2024.01)}$

(52) Cooperative Patent Classification (CPC):
**G01S 19/14; B60W 60/0018; G01S 19/426;**
**G05D 1/248;** B60W 2556/25; B60W 2556/45;
B60W 2556/50; G01S 19/396; G01S 19/41;
G01S 19/43; G05D 2105/20; G05D 2109/10

(54) **MOTION CONTROL FOR VEHICLES USING REAL-TIME KINEMATIC POSITIONING**

BEWEGUNGSSTEUERUNG FÜR FAHRZEUGE MIT KINEMATISCHER
ECHTZEITPOSITIONIERUNG

COMMANDE DE MOUVEMENT POUR VÉHICULES UTILISANT UN POSITIONNEMENT
CINÉMATIQUE EN TEMPS RÉEL

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**16.04.2025 Bulletin 2025/16**

(73) Proprietor: **VOLVO TRUCK CORPORATION**
**405 08 Göteborg (SE)**

(72) Inventor: **RYDSTRÖM, Mats**
**427 39 Billdal (SE)**

(74) Representative: **Ström & Gulliksson AB**
**P.O. Box 4188**
**203 13 Malmö (SE)**

(56) References cited:
WO-A1-2021/184320    CN-A- 114 715 166
CN-A- 115 416 675

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The disclosure relates generally to motion control for vehicles. In particular aspects, the disclosure relates to motion control for heavy-duty vehicles using real-time kinematic positioning. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicle motion management (VMM) is an important function for the safety and efficiency of modern vehicular operations. Successful VMM depends on precise knowledge of vehicle motion state, such as its speeds, accelerations, yaw, and more.

Some VMM systems rely partly on satellite signals for determining vehicle position and motion parameters. However, the accuracy of satellite-based estimated motion state parameters can be influenced by several factors like satellite geometry, atmospheric conditions, and signal multipath, potentially affecting the reliability of VMM.

WO 2021/184320 A1 describes a vehicle positioning method, wherein an operational design domain (ODD) is used in relation to determination of first and second locations of a vehicle.

CN 114715166 A describes a vehicle control method, wherein fault information of a current vehicle is obtained, and driving control data is determined according to the fault information and a current design operation domain (ODD).

CN 115416675 A describes a positioning data processing method with detection conditions for vehicle motion parameters and combined positioning data.

Real-time kinematic (RTK) positioning is a technique used to enhance the accuracy of position data derived from satellite-based positioning systems. RTK achieves higher precision by using correction data from a nearby base station, which is positioned at a known location. The base station sends correction data to the vehicle, thereby improving the accuracy of the derived position data.

A problem with network assisted RTK is that it will, at times, not be available. This unavailability can occur in situations such as being in rural areas without cellular coverage or when GPS reception is lost, e.g., in tunnels. Improving vehicle motion management and addressing scenarios without cellular or GPS coverage is thus crucial for enhancing and ensuring the safety of heavy-duty vehicle operations.

## SUMMARY

According to a first aspect of the disclosure, a control unit for controlling motion of a vehicle through RTK positioning is disclosed. The control units discussed herein are particularly suitable for use in a heavy-duty vehicle such as rigid trucks or semi-trailer tractor vehicles adapted for road transport. The control unit comprises a vehicle state interface configured to receive vehicle state information from one or more vehicle state sensors, including kinematic parameters and information about availability of correction data. The control unit also comprises a memory configured to store at least one nominal operational design domain (ODD) for the vehicle, and for each stored nominal ODD, a corresponding RTK-enhanced ODD, wherein each nominal ODD is associated with greater safety margins relative to its respective RTK-enhanced ODD. The greater safety margins may, e.g., comprise a reduced maximum longitudinal velocity of the vehicle, a reduced maximum lateral force or curvature, and so on. Additionally, the control unit is configured to select an active ODD based on the availability of correction data, wherein an RTK-enhanced ODD is selected upon availability of correction data, and a nominal ODD is selected otherwise. Based on this arrangement, the control unit is configured to operate the vehicle using the kinematic parameters in accordance with the active ODD. The first aspect of the disclosure may seek to mitigate the problem of not always having RTK correction data available. A technical benefit may include that the vehicle can utilize RTK-enhanced ODDs to take advantage of the enhanced accuracy when kinematic parameters with centimeter precision are available. Meanwhile, less precise kinematic parameters are supported by nominal ODDs that prioritize improved safety margins.

Optionally in some examples, including in at least one preferred example, the control unit may be further configured to detect driving anomalies using the received kinematic parameters from the available RTK receivers, and to respond to detected driving anomalies by sending control commands to one or several motion support devices. A technical benefit may include early detection of various driving anomalies.

Optionally in some examples, including in at least one preferred example, the received kinematic parameters comprises kinematic parameters from a first and a second RTK receiver. A technical benefit may include that RTK positioning errors can be detected if the calculated distance between the first and second RTK receivers deviates from their actual physical separation. The first RTK receiver can for instance be positioned closer to the front of the vehicle relative to the second RTK receiver. A technical benefit of such RTK placement may include early detection of driving anomalies that require knowledge of the relative position or velocity between the front and the rear of the vehicle.

Optionally in some examples, including at least one preferred example, the received kinematic parameters further comprises kinematic parameters from a first, a second, a third and a fourth RTK receiver, and wherein the first, second, third, and fourth RTK receivers are positioned in each corner of the vehicle, with an RTK receiver at each corner. A technical benefit may include added redundancy by having four RTK receivers. For example, an RTK positioning error in one receiver can be detected and bypassed as long as calculated distances between the other RTK receivers remain consistent with their actual physical separations.

Optionally in some examples, including at least one preferred example, the control unit is further configured to determine positional accuracy by comparing the relative positions of the available RTK receivers to the relative positions obtained from the received kinematic parameters. A technical benefit may include that the control unit gains insight into the accuracy of the GPS/RTK estimates. This understanding can, for instance, be utilized in choosing the active ODD, i.e., choosing between a nominal ODD and its respective RTK-enhanced ODD.

Optionally in some examples, including at least one preferred example, the control unit is further configured to automatically switch between the nominal and the RTK-enhanced ODD based on the availability of correction data, wherein the switch is triggered by a change in the availability of correction data. A technical benefit may include that an RTK-enhanced ODD will not remain active if the vehicle loses its connection to the nearby base station. This improves vehicle operational safety.

According to a second aspect of the disclosure, a vehicle is disclosed. The vehicle comprises a first RTK receiver configured to receive a plurality of satellite signals, a correction data receiver configured to determine the availability of correction data, and receive, upon availability, correction data from a base station. The vehicle also comprises a digital signal processor (DSP) configured to determine kinematic parameters from the received satellite signals and, upon availability, also from the correction data,. The second aspect of the disclosure may seek to mitigate the problem of the vehicle not always having RTK correction data available. A technical benefit may include that the vehicle can utilize RTK-enhanced ODDs to take advantage of the enhanced accuracy when kinematic parameters with centimeter precision are available. Meanwhile, less precise kinematic parameters are supported by nominal ODDs that prioritize improved safety margins.

Optionally in some examples, including in at least one preferred example, the vehicle may further comprise a second RTK receiver configured to receive a plurality of satellite signals and a control unit further configured for a first and a second RTK receiver according to the first aspect of the invention. A technical benefit may include that RTK positioning errors can be detected if the calculated distance between the first and second RTK receivers deviates from their actual physical separation.

Optionally in some examples, including in at least one preferred example, the vehicle may further comprise, a first, a second, a third and a fourth RTK receiver configured to receive a plurality of satellite signals, and a control unit further configured for a first, a second, a third and a fourth RTK receiver according to the first aspect of the invention. A technical benefit may include added redundancy by having four RTK receivers. For example, an RTK positioning error in one receiver can be detected and bypassed as long as calculated distances between the other RTK receivers remain consistent with their actual physical separations.

According to a third aspect of the disclosure, a method for controlling motion by a vehicle through RTK positioning is disclosed. The method comprises defining at least one nominal ODD for the vehicle, and for each nominal ODD, defining a corresponding RTK-enhanced ODD, wherein each nominal ODD is associated with greater safety margins relative to its respective RTK-enhanced ODD. The method further comprises receiving a plurality of satellite signals at a first RTK receiver on the vehicle, receiving correction data from a base station in case correction data is available, and determining kinematic parameters from the received satellite signals and, upon availability, the correction data. Additionally, the method comprises selecting an active ODD based on the availability of correction data, wherein the RTK-enhanced ODD is selected upon availability of correction data, and a nominal ODD is selected otherwise, and operating S6 the vehicle using the kinematic parameters in accordance with the active ODD. The third aspect of the disclosure may seek to mitigate the problem of the vehicle not always having RTK correction data available. A technical benefit may include that the vehicle can utilize RTK-enhanced ODDs to take advantage of the enhanced accuracy when kinematic parameters with centimeter precision are available. Meanwhile, less precise kinematic parameters are supported by nominal ODDs that prioritize improved safety margins.

Optionally in some examples, including in at least one preferred example, the method further comprises detecting driving anomalies using the kinematic parameters and responding to detected driving anomalies by sending control commands to one or several motion support devices. A technical benefit may include early detection of various driving anomalies.

Optionally in some examples, including in at least one preferred example, the vehicle comprises a second RTK receiver and receiving further comprises receiving a plurality of satellite signals at the second RTK receiver on the vehicle. A technical benefit may include that RTK positioning errors can be detected if the calculated distance between the first and second RTK receivers deviates from their actual physical separation.

Optionally in some examples, including in at least one preferred example, the first RTK receiver is arranged to be positioned closer to the front of the vehicle relative to the second RTK receiver. A technical benefit may include early detection of driving anomalies that require knowledge of the relative position or velocity between the front and the rear of the vehicle.

Optionally in some examples, including in at least one preferred example, the vehicle comprises a first, a second, a third and a fourth RTK receiver and receiving further comprises receiving a plurality of satellite signals at the first, second, third and fourth RTK receivers, and wherein the first, second, third, and fourth RTK receivers are positioned in each corner of the vehicle, with an RTK receiver at each corner. A technical benefit may include added redundancy by having four RTK receivers. For example, an RTK positioning error in one receiver can be detected and bypassed as long as calculated distances between the other RTK receivers remain consistent with their actual physical separations.

Optionally in some examples, including in at least one preferred example, the method further comprises determining a positional accuracy metric by comparing the relative positions of the available RTK receivers to the determined relative positions obtained from the received satellite signals and, upon availability, the correction data. A technical benefit may include that the control unit gains insight into the accuracy of the GPS/RTK estimates. This understanding can, for instance, be utilized in choosing the active ODD.

Optionally in some examples, including in at least one preferred example, the selecting further involves automatically switching between the nominal and the RTK-enhanced ODD based on the availability of correction data, and wherein switching is triggered by a change in the availability of correction data. A technical benefit may include that an RTK-enhanced ODD will not remain active if the vehicle loses its connection to the nearby base station.

Optionally in some examples, including in at least one preferred example, determining kinematic parameters from the received satellite signals further comprises: determining an approximate position of the vehicle, monitoring phase of the plurality of satellite signals over a time period, and determining a three-dimensional velocity of the vehicle based on a change in the monitored phases over the time period. A technical benefit may include refined velocity predictions when correction data is unavailable.

Additional features and advantages are disclosed in the following description, claims, and drawings, and in part will be readily apparent therefrom to those skilled in the art or recognized by practicing the disclosure as described herein.

There are also disclosed herein a computer program and a computer readable medium associated with the above discussed technical benefits.

## BRIEF DESCRIPTION OF THE DRAWINGS

Examples are described in more detail below with reference to the appended drawings.

FIG. 1 is an exemplary system diagram of a heavy-duty vehicle using real-time kinematic positioning according to an example.

FIG. 2 shows an example of motion support device control systems.

FIG. 3A shows an example of a heavy-duty vehicle with two RTK receivers.

FIG. 3B shows an example of a heavy-duty vehicle with four RTK receivers.

FIG. 4 is a flow chart of an exemplary method for controlling motion of a heavy-duty vehicle through real-time kinematic positioning according to an example.

FIG. 5A schematically illustrates a control unit.

FIG. 5B shows an example of a computer program product.

FIG. 6 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

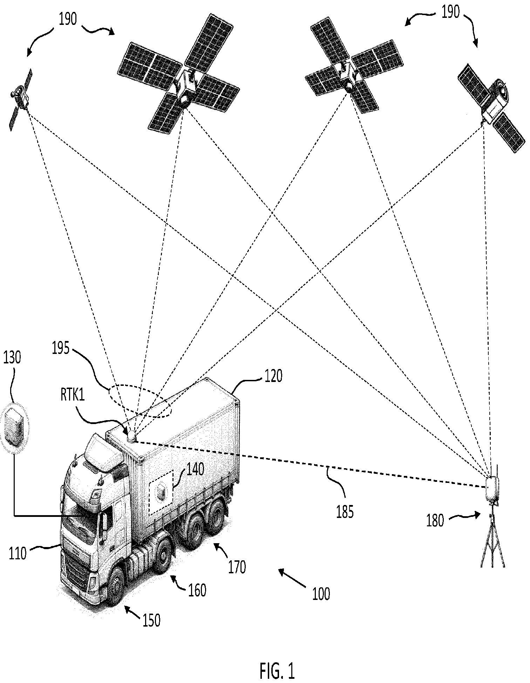

FIG. 1 illustrates an example vehicle 100 for cargo transport where the herein disclosed techniques can be applied with advantage. The vehicle 100 comprises a tractor or towing vehicle 110 supported on front wheels 150 and rear wheels 160, at least some of which are driven wheels. The tractor 110 is configured to tow a first trailer unit 120 supported on trailer wheels 170 by a fifth wheel connection in a known manner. The trailer wheels are normally braked wheels but may also comprise driven wheels on one or more axles.

The teachings herein are particularly suitable for heavy-duty vehicles such as trucks, buses, coaches, and heavy construction equipment. A heavy-duty vehicle can be defined as a freight vehicle of more than 3.5 metric tonnes (trucks) or passenger transport vehicles of more than 8 seats (buses and coaches).

The tractor 110 comprises a vehicle unit computer (VUC) 130 for controlling various kinds of functionality, among other things, to achieve propulsion, braking, and steering. Some trailer units 120 also comprise a VUC 140 for controlling various functions of the trailer, such as braking of trailer wheels, and sometimes also trailer wheel propulsion. The VUCs 130, 140 may be centralized or distributed over several processing circuits. Parts of the vehicle control functions may also be executed remotely, e.g., on a remote server connected to the vehicle 100 via wireless link and a wireless access network.

The VUC 130 on the tractor 110 (and possibly also the VUC 140 on the trailer 120) may be configured to execute vehicle control methods which are organized according to a layered functional architecture where some functionality may be comprised in a traffic situation management (TSM) domain in a higher layer and some other functionality may be comprised in a vehicle motion management (VMM) domain residing in a lower functional layer. The TSM plans driving operation with a time horizon of, e.g., 10 seconds. This time frame corresponds to, e.g., the time it takes for the vehicle 100 to negotiate a curve. The vehicle maneuvers planned and executed by the TSM can be associated with acceleration profiles and curvature profiles. The TSM continuously requests the desired acceleration profiles and curvature profiles from the VMM function which performs force allocation to meet the requests from the TSM in a safe and robust manner.

The VMM operates with a time horizon of about 1 second or so, and continuously transforms the acceleration profiles and curvature profiles into control commands for controlling vehicle motion functions, actuated by the different MSDs of the vehicle. If the vehicle is in motion, the VMM performs motion estimation, i.e., determines positions, speeds, accelerations, articulation angles of the different units in the vehicle combination by monitoring operations using various sensors arranged on the vehicle, often in connection to the MSDs. For instance, by determining vehicle unit motion using, e.g., global positioning systems, radar sensors and/or lidar sensors, and translating this vehicle unit motion into a local coordinate system of a given wheel, it becomes possible to accurately estimate wheel slip by comparing the vehicle unit motion in the wheel reference coordinate system to data obtained from a wheel speed sensor arranged in connection to the wheel. A tyre model can be used to translate between desired tyre force and wheel slip.

The VMM furthermore manages force generation and coordination, i.e., it determines what forces that are required in order to fulfil the requests from the TSM, for instance to accelerate the vehicle according to a requested acceleration profile requested by TSM and/or to generate a certain curvature motion by the vehicle also requested by TSM. The forces may comprise e.g., longitudinal forces and lateral forces, as well as different types of torques.

Additionally, FIG. 1 illustrates an example of a system for determining vehicle position and motion through real-time kinematic (RTK) technology. As previously mentioned, estimating vehicle motion involves determining kinematic parameters like position, speed, and acceleration. RTK improves this process by utilizing a reference base station 180, whose position is known, to provide real-time corrections 185 that enhance positioning to centimeter-level precision.

Based on the example provided, the heavy-duty vehicle 100 is equipped with a first RTK receiver RTK1 that captures the signals 195 from multiple GPS satellites 190. The reference base station 180, having a known location, also receives these satellite signals 195 and based on the known location it computes real-time kinematic correction data 185 (hereinafter referred to as correction data). This data is passed on to the vehicle 100, where the RTK receiver processes the correction data 185 alongside the satellite signals 195 to obtain enhanced estimates of the vehicle's position. Other kinematic parameters, such as speed and acceleration, are also obtained from the enhanced RTK estimates. The improved precision makes RTK-assisted estimation of kinematic parameters, such as position, speed, and acceleration, very beneficial for TSM and VMM functions, which may both take advantage of the refined estimates. RTK-enhanced GPS positioning systems are generally known and will therefore not be discussed in detail herein.

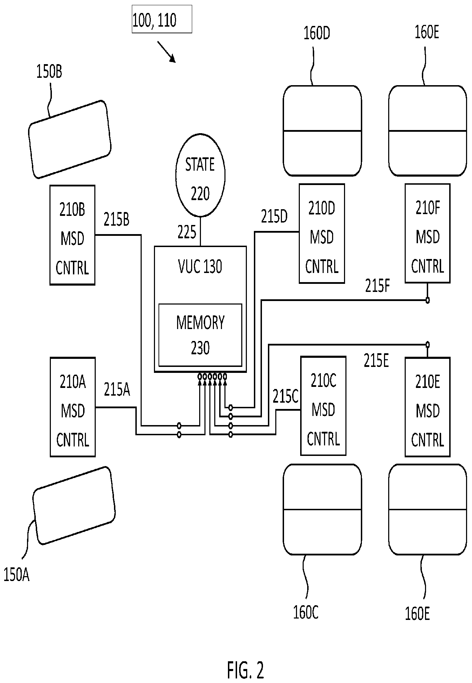

FIG. 2 schematically illustrates a vehicle 100, 110 with a VUC 130, comprising a memory 230. The VUC 130 is arranged to control a plurality of MSD control units 210A, 210B, 210C, 210D, 210E, 210F through a connection interface 215B, 215B, 215C, 215D, 215E, 215F. Each MSD control unit is arranged to control a respective wheel 150A, 150B, 160C, 160D, 160E, 160F.

In the subsequent paragraphs, a first aspect relating to a control unit for controlling motion of a vehicle 100 is described, covering both heavy-duty vehicles (e.g., trucks, buses, or construction equipment) and smaller passenger vehicles (e.g., passenger cars with five or fewer seats).

Referring to FIGS. 1 and 2, the VUC 130, and potentially also the VUC 140, are control units 130, 140 that manage the motion of the heavy-duty vehicle 100 via RTK positioning and with functionalities spanning both TSM and VMM domains.

The control unit 130, 140 comprises a vehicle state interface 225 that is configured to receive vehicle state information from one or more vehicle state sensors 220. The vehicle state information comprises the kinematic parameters of the first RTK receiver and information about availability of correction data 185. To emphasize, the control unit 130, 140 not only receives the kinematic parameters but also information to determine whether the RTK receiver derived these parameters exclusively from satellite signals 195 or in conjunction with correction data 185 from the base station 180.

The control unit 130, 140 further comprises a memory 230 for storing operational design domains, ODDs. An ODD is a set of operating conditions for an automated system, often used in the field of autonomous vehicles for various levels of driving automation. These operating conditions may, for example, include environmental, geographical and time of day constraints, traffic, and roadway characteristics. One of the main purposes of the ODD is to indicate under what conditions the vehicle can operate safely.

An ODD can, generally, be determined from computer simulation of the vehicle in different operating environments and operating conditions. An ODD can also be determined based on practical experimentation, such as test driving on a test track. Methods of configuring one or more suitable ODDs in a vehicle are generally known and will therefore not be discussed in more detail herein.

The memory 230 is configured to store at least one nominal ODD, for the vehicle 100, and for each stored nominal ODD, a corresponding RTK-enhanced ODD, wherein each nominal ODD is associated with greater safety margins relative to its respective RTK-enhanced ODD. In some examples, greater safety margins may refer to a reduced speed for the nominal ODD when compared to its respective RTK-enhanced ODD. In some examples, the greater safety margins relate to the vehicle's position and distances it maintains while maneuvering in traffic. In some examples, the greater safety margins might mean prohibiting maneuvers for the nominal ODD that are permissible for the RTK-enhanced ODD. In some examples, the nominal ODD imposes limits on parameters such as lateral acceleration, longitudinal velocity, and yaw rate, among others.

The mapping between a nominal ODD and its corresponding RTK-enhanced ODD is typically a one-to-one mapping but may also be a one-to-many or many-to-one relationship.

The control unit 130, 140 is further configured to select an active ODD from the at least one nominal ODD and the at least one RTK-enhanced ODDs. The active ODD is selected based on the availability of correction data 185. Specifically, an RTK-enhanced ODD is selected upon availability of correction data 185, and a nominal ODD is selected otherwise. This prevents the RTK-enhanced ODD from being active when RTK positioning is unavailable. When an active ODD has been chosen, the control unit 130, 140 is configured to operate the vehicle using the kinematic parameters in accordance with the active ODD. Through this approach, the vehicle can utilize RTK-enhanced ODDs to take advantage of the enhanced accuracy when kinematic parameters with centimeter precision are available. Meanwhile, less precise kinematic parameters are supported by nominal ODDs that prioritize improved safety margins.

A safety margin relates to an allowable range of vehicle states relative to some performance limit or physical limit. Suppose for instance that the top speed of the vehicle is 150 km/h, but that a margin is applied such that the vehicle maximum allowable speed is limited to 100 km/h, the safety margin is then 50 km/h. A safety margin may also comprise limitations on maximum speed of the vehicle as it enters into a steering maneuver to negotiate road curvature, limitations on allowable lateral acceleration or yaw rate, limitations on steering rate, and so on. Generally, a safety margin is a back-off amount relative to a performance limit or a physical limit. A vehicle with high safety margins has a reduced performance compared to a vehicle with low safety margins. Thus, the productivity of a vehicle having low safety margins may be larger, but the risk of suffering an accident or other undesired road event is also greater. The techniques disclosed herein allow an efficient trade-off between maximizing productivity and maintaining safe vehicle operation.

Preferably, the control unit 130, 140 is also configured to automatically switch between the nominal and the RTK-enhanced ODD based on the availability of correction data 185, wherein the switch is triggered by a change in the availability of correction data 185.

The control unit 130, 140 may also be configured to detect driving anomalies using the received kinematic parameters from the available RTK receivers. If the active ODD allows, the control unit may respond to a driving anomaly by sending control commands to one or several motion support devices (MSDs), such as brakes, propulsion devices, suspension devices, steering actuators, and the like. For instance, when RTK positioning is available, the control unit can detect deviations from the vehicle's expected path with centimeter-level accuracy. Subsequently, the control unit can determine an appropriate response and transmit it to the MSDs through control commands.

It is appreciated that there may be additional ODDs implemented in the control unit, i.e., the control unit may implement one or more nominal ODDs with corresponding RTK-enhanced ODDs as described above, and also one or more other ODDs which are not reconfigured based on the availability of RTK information. If a non-RTK dependent ODD is in use, the vehicle will not switch to RTK-based operation regardless of the availability of RTK information.

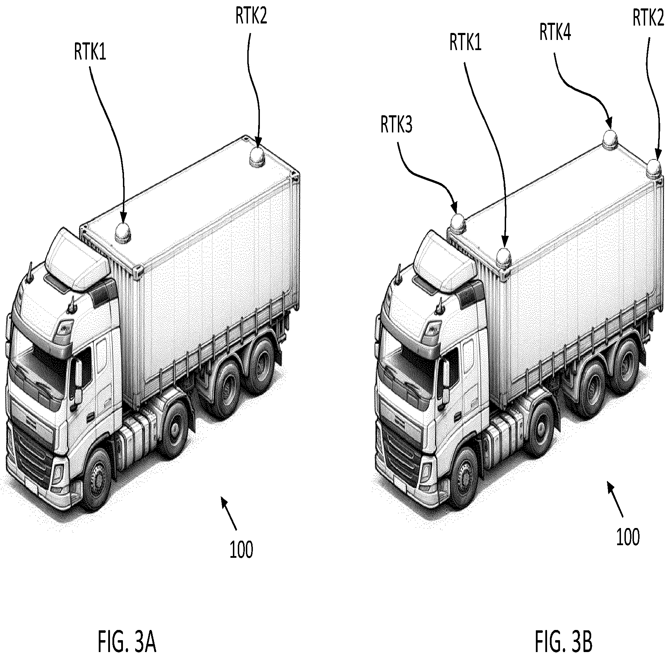

FIGS. 3A and 3B show two examples of a heavy-duty vehicle with two RTK and four RTK receivers, respectively. Continuing with examples related to the control unit 130, 140, the response of the control unit can be further improved if the received kinematic parameters include data from both a first and a second RTK receiver RTK1, RTK2 on the vehicle 100, as illustrated in FIG. 3A. For example, if the first RTK receiver is located closer to the vehicle's front compared to the second RTK receiver, and only the second receiver detects a lateral speed while the first does not, this might suggest the vehicle is in a skid. Using a second RTK receiver also has the advantage of enhancing reliability, as GPS positioning errors can be detected if the calculated distance between the first and second RTK receivers deviates from their actual physical separation.

The response of the control unit 130, 140 can be even further improved if the received kinematic parameters additionally comprises data from a third and a fourth RTK receiver RTK3, RTK4, on the vehicle 100, as illustrated in FIG. 3B. The first, second, third, and fourth RTK receivers can then be positioned at each corner of the vehicle, with one RTK receiver at each corner. This enables a very precise tracking of position and motion of the vehicle, thereby facilitating early detection of various driving anomalies.

Likewise, RTK positioning errors can be detected if the calculated distance between any of the RTK receivers deviates from their actual physical separation. Having four receivers also provides added redundancy. For example, an RTK positioning error in one receiver can be detected and bypassed as long as calculated distances between the other RTK receivers remain consistent with their actual physical separations.

In one example, the kinematic parameters comprise data from a first, a second, and a third RTK receiver on the vehicle 100. Having three receivers is sufficient to detect and bypass a positioning error in at most one receiver. That is, as long as the calculated distances between the other two RTK receivers remain consistent with their actual physical separations.

Utilizing multiple RTK receivers also enables one to determine a metric for positional accuracy, such as mean absolute error or mean squared error. By comparing the physical distance between RTK receivers with the estimated separation derived from the kinematic parameters, one can easily compute accuracy metrics like mean absolute error or mean squared error.

In the subsequent paragraphs, a second aspect relating to a vehicle 100 is described, covering both heavy-duty vehicles (e.g., trucks, buses, or construction equipment) and standard vehicles (e.g., cars).

The vehicle 100 comprises a first RTK receiver RTK1 configured to receive a plurality of satellite signals 195. The vehicle 100 also comprises a correction data receiver RTK1 configured to determine the availability of correction data 185, and receive, upon availability, correction data 185 from a base station 180. The correction data receiver RTK1 is typically comprised in the same housing as the first RTK receiver but operates in a different frequency band and with a different antenna. In network assisted RTK, the base station 180 typically utilizes the existing cellular network, such as 5G, to transmit the correction data 185 to the receiver RTK1.

The vehicle 100 may additionally comprise a second RTK receiver RTK2 configured to receive a plurality of satellite signals 195. The vehicle 100 may also comprise a third and a fourth RTK receiver RTK3, RTK4 configured to receive a plurality of satellite signals 195.

The vehicle 100 will typically comprise an additional correction data receiver RTK2, RTK3, RTK4 for each additional RTK receiver RTK2, RTK3, RTK4. However, utilizing one correction data receiver for all available RTK receivers can sometimes be preferable as it eliminates the need for multiple sets of the same hardware.

The vehicle 100 further comprises a DSP configured to determine kinematic parameters from the received satellite signals 195 and, upon availability, the correction data 185. In other words, the DSP is configured to determine kinematic parameters using the received satellite signals 195, utilizing correction data 185 when available and relying solely on the satellite signals when it's not. Kinematic parameters may include aspects such as position, velocity, acceleration, or any other parameter related to the motion of the vehicle. Certain kinematic parameters, like velocity and acceleration, are derived by analyzing the vehicle's position over a specific time interval.

The vehicle 100 will generally comprise a DSP for each RTK receiver RTK1, RTK2, RTK3, RTK4. However, utilizing one DSP for all available RTK receivers can sometimes be preferable as it eliminates the need for multiple sets of the same hardware.

The vehicle 100 further incorporates a control unit, as described in previous paragraphs.

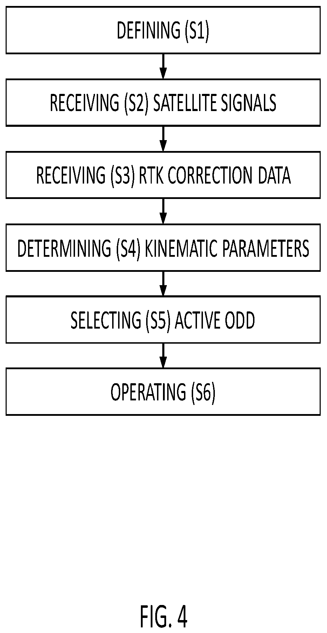

**FIG. 4** is a flow chart of an exemplary method for controlling motion of a vehicle through real-time kinematic positioning according to an example.

In the subsequent paragraphs, a third aspect relating to a method for controlling motion of a vehicle 100 through real-time kinematic positioning is described. The vehicle 100 is typically a heavy-duty vehicle (e.g., trucks, buses, or construction equipment), but it can also be a standard vehicle (e.g., cars).

The method comprises the step of defining S1 at least one nominal operational design domain, ODD, for the vehicle 100, and for each nominal ODD, defining a corresponding RTK-enhanced ODD, wherein each nominal ODD is associated with greater safety margins relative to its respective RTK-enhanced ODD. In some examples, greater safety margins may refer to a reduced speed for the nominal ODD when compared to its respective RTK-enhanced ODD. In some examples, the greater safety margins relate to the vehicle's position and distances it maintains while maneuvering in traffic. In some examples, the greater safety margins might mean prohibiting maneuvers for the nominal ODD that are permissible for the RTK-enhanced ODD.

The mapping between a nominal ODD and its corresponding RTK-enhanced ODD is typically a one-to-one mapping but may also be a one-to-many or many-to-one relationship.

The method further involves the step of receiving S2 a plurality of satellite signals 195 at a first RTK receiver RTK1 on the vehicle 100. In some examples, the step of receiving S2 may involve receiving a plurality of satellite signals 195 at a first RTK receiver RTK1 and a second RTK receiver RTK2 on the vehicle 100. In some examples, the step of receiving S2 may further involve receiving a plurality of satellite signals 195 at a first RTK receiver RTK1, a second RTK receiver RTK2, a third RTK receiver RTK3 and a fourth RTK receiver RTK4 on the vehicle. Utilizing multiple RTK receivers is often beneficial because it enhances the tracking of the vehicle's position and motion among other advantages, as will be described in the paragraphs to follow.

The method further comprises the step of receiving S3 correction data 185 from a base station 180 in case correction data 185 is available. In network assisted RTK, the base station 180 typically utilizes the existing cellular network, such as 5G, to transmit the correction data 185 to the receiver.

Next, the method comprises the step of determining S4 kinematic parameters from the received satellite signals 195 and, upon availability, the correction data 185. In other words, the process of determining kinematic parameters relies on the received satellite signals 195, utilizing correction data 185 when it's available, and depending solely on the satellite signals when it isn't. Kinematic parameters may include aspects such as position, velocity, acceleration, or any other parameter related to the motion of the vehicle. Certain kinematic parameters, like velocity and acceleration, are typically derived by analyzing the vehicle's position over a specific time interval.

A key step of the method involves selecting S5 an active ODD based on the availability of correction data, wherein an RTK-enhanced ODD is selected upon availability of correction data, and a nominal ODD is selected otherwise. This prevents the RTK-enhanced ODDs from being active when RTK positioning is unavailable. Preferably, the step of selecting S5 also involves automatically switching between the RTK-enhanced ODD and the nominal ODD based on the availability of the correction data 185, and wherein switching is triggered by a change in the availability of correction data 185 changes. Consequently, an RTK-enhanced ODD will not remain active if the vehicle 100 loses its connection to the nearby base station 180.

The method further comprises the step of operating S6 the vehicle using the kinematic parameters in accordance with the active ODD. Through this approach, the vehicle can utilize RTK-enhanced ODDs to take advantage of the enhanced accuracy when kinematic parameters with centimeter precision are available. Meanwhile, less precise kinematic parameters are supported by nominal ODDs that prioritize improved safety margins.

The method may additionally comprise the step of detecting S7 driving anomalies using the kinematic parameters. For example, when RTK positioning is available, it's possible to detect deviations from the vehicle's expected path with centimeter precision.

The step of detecting S7 can be further refined if the kinematic parameters include data from both a first RTK receiver RTK1 and a second RTK receiver RTK2 on the vehicle 100. For example, if the first RTK receiver is located closer to the vehicle's front compared to the second RTK receiver, and only the second receiver detects a lateral speed while the first does not, this might suggest the vehicle is in a skid. In a similar manner, other driving anomalies, deviations, and even planned maneuvers can be identified and analyzed.

Using a second RTK receiver also has the advantage of enhancing reliability, as RTK positioning errors can be detected if the calculated distance between the first and second RTK receivers deviates from their actual physical separation.

The step of detecting S7 can be even further refined if the received kinematic parameters additionally comprises data from a third and a fourth RTK receiver RTK3, RTK4, on the vehicle 100. The first, second, third, and fourth RTK receivers can then be positioned in each corner of the vehicle, with an RTK receiver at each corner. This enables a very precise tracking of the vehicle's motion and position, thereby facilitating early detection of various driving anomalies.

Likewise, RTK positioning errors can be detected if the calculated distance between any of the RTK receivers deviates from their actual physical separation. Having four receivers adds redundancy. A positioning error in one receiver can then easily be detected and bypassed if the calculated distance between the other RTK receivers does not deviate from the actual physical separation.

In one example, the kinematic parameters comprise data from a first, a second, and a third RTK receiver on the vehicle 100. Having three receivers is sufficient to detect and bypass a positioning error in at most one receiver. That is, as long as the calculated distances between the other two RTK receivers remain consistent with their actual physical separations.

As mentioned above, the method may comprise the step of detecting S7 driving anomalies using the kinematic parameters. If the active ODD allows, the method may also comprise the step of responding S8 to the driving anomalies by sending control commands to one or several motion support devices (MSDs). Typically, this would involve a set of predetermined actions that are communicated as control commands to the motion support devices to address a driving anomaly. These actions may be adapted based on the current vehicle states.

The method may additionally comprise the step of determining S9 a positional accuracy metric, such as mean absolute error or mean squared error. By comparing the relative positions of the available RTK receivers to the relative positions obtained from the received kinematic parameters, it is straightforward to calculate the mean absolute error or mean squared error.

The method may additionally comprise the step of determining S9 a positional accuracy metric, such as mean absolute error or mean squared error. Utilizing multiple RTK receivers also enables one to determine a metric for positional accuracy, such as mean absolute error or mean squared error. By comparing the physical distance between RTK receivers with the estimated separation derived from the kinematic parameters, one can easily compute accuracy metrics like mean absolute error or mean squared error.

Lastly, the step of determining S4 kinematic parameters may additionally comprise determining an approximate position using the satellite signals 195, monitoring phase of the plurality of satellite signals over a time period and determining a three-dimensional velocity of the vehicle based on a change in the monitored phases over the time period. This method offers refined velocity predictions when correction data is unavailable.

In subsequent paragraphs, other aspects relating to the control unit, the vehicle and the method are provided.

In some examples, a method for estimating the three-dimensional velocity of a vehicle can be used. The method comprises: receiving a plurality of GPS signals from one or more GPS systems, monitoring a phase of incoming GPS signals over a time period, assuming a position of the vehicle, and determining basis vectors from the assumed position to known satellite positions of the received GPS signals, and determining the speed of the vehicle based on a change in the monitored phases over the time period, and on the basis vectors.

In some examples, the assumed position is an area A, and the velocity estimate is obtained by marginalization over the area.

The method also comprises assuming RTK-GPS correction factors or marginalizing over them (signal path delay due to the ionosphere and/or due to the troposphere, receiver clock offset from the reference GPS time, satellite clock offset from the reference GPS time, and speed of light).

In some examples, the GPS signals are received from a plurality of different systems, e.g., GPS, GLONASS, Galileo, BeiDou.

GPS works by measuring distances between a ground station and satellites at known positions in the sky. Classic GPS measures distance by correlating satellite codes vs reference codes. Real-time kinematic GPS instead uses the phase of the carrier wave to determine distances. The phase $\phi$ of an incoming GPS signal is

$$\phi = \rho - I + Tr + c(b_{Rx} - b_{Sat}) + [N\lambda + \varepsilon]_{\phi},$$

where $I$ is the signal path delay due to the ionosphere, $Tr$ is the signal path delay due to the troposphere, $b_{Rx}$ is the receiver clock offset from the reference GPS time, $b_{Sat}$ is the satellite clock offset from the reference GPS time, c is the vacuum speed of light, $\lambda$ is the carrier nominal wavelength, N is the ambiguity of the carrier-phase (integer number), $\varepsilon_{\phi}$ are the measurement noise components, including multipath and other effects, and $\rho$ is the geometrical range between the satellite and the receiver. This expression can be used to determine vehicle position with high accuracy, as long as reference information is available.

In some examples for VMM, it may not be necessary to know the actual position of the vehicle with high resolution. It is enough to know the speeds and accelerations in different directions. This can be done without RTK information by assuming a reasonable set of values for the correction factors, and also assuming a reasonable position, since a position error will only have a very small effect on the angles of the basis vectors to the satellites.

In some examples, the method simply assumes a position of the vehicle (e.g., somewhere on a road towards a destination, can have tens of meters of error), and also assumes a set of correction factors. The method then finds the most likely velocity vector that makes the change in observed phase the most likely. A maximum-likelihood method can be used, or a Bayesian marginalization over an area. The point being that the basis vector angles will not change much due to a ten-meter position error, due to the large distances between earth surface and satellite orbits.

If a probability distribution of position is available, then this distribution may be used in marginalization of the vehicle position. The method may further comprise a search over the velocity direction sphere and evaluate the likelihood for each given distance direction based on the observed phase changes over the time period.

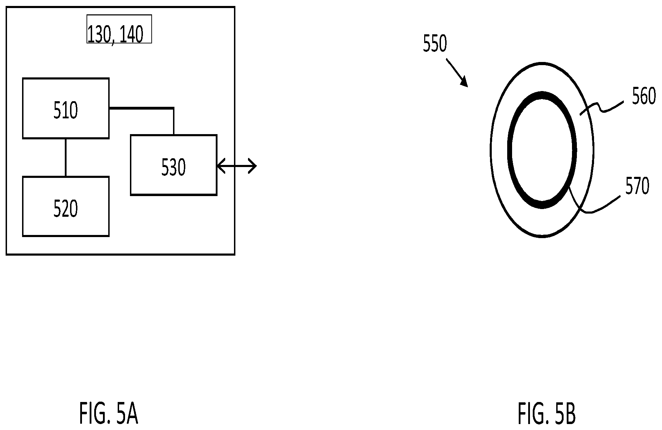

FIG. 5A schematically illustrates, in terms of a number of functional units, the components of a control unit 500 according to aspects of the discussions and methods disclosed herein. This control unit 500 may be comprised in the vehicle 100, e.g., in the form of a vehicle motion management (VMM) function unit configured to perform force allocation and the like. Processing circuitry 510 is provided using any combination of one or more of a suitable central processing unit CPU, multiprocessor, microcontroller, digital signal processor DSP, etc., capable of executing software instructions stored in a computer program product, e.g., in the form of a storage medium 530. The processing circuitry 510 may further be provided as at least one application specific integrated circuit ASIC, or field programmable gate array FPGA.

Particularly, the processing circuitry 510 is configured to cause the control unit 500 to perform a set of operations, or steps, such as the methods discussed in connection to FIG. 4. For example, the storage medium 530 may store the set of operations, and the processing circuitry 510 may be configured to retrieve the set of operations from the storage medium 530 to cause the control unit 500 to perform the set of operations. The set of operations may be provided as a set of executable instructions. Thus, the processing circuitry 510 is thereby arranged to execute methods as herein disclosed.

The storage medium 530 may also comprise persistent storage, which, for example, can be any single one or combination of magnetic memory, optical memory, solid state memory or even remotely mounted memory.

The control unit 500 may further comprise an interface 5230 for communications with at least one external device, such as an electric machine or a gearbox. As such the interface 530 may comprise one or more transmitters and receivers, comprising analogue and digital components and a suitable number of ports for wireline or wireless communication.

The processing circuitry 510 controls the general operation of the control unit 470, e.g., by sending data and control signals to the interface 520 and the storage medium 830, by receiving data and reports from the interface 520, and by retrieving data and instructions from the storage medium 530. Other components, as well as the related functionality, of the control node are omitted in order not to obscure the concepts presented herein.

**FIG. 5B** illustrates a computer readable medium 560 carrying a computer program comprising program code means 570 for performing, e.g., the methods illustrated in FIG. 4, when said program product is run on a computer. The computer readable medium and the code means may together form a computer program product 550.

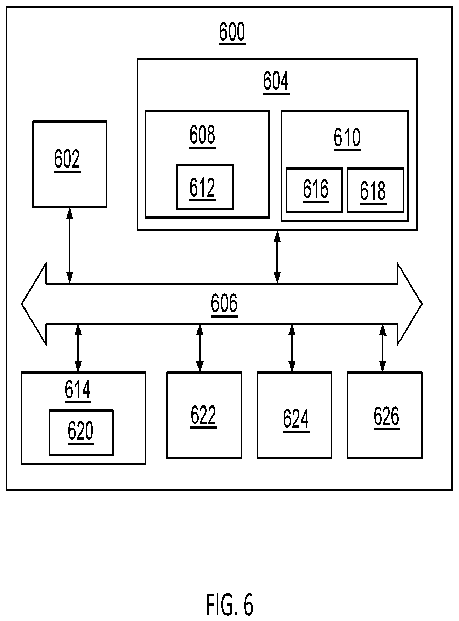

**FIG. 6** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, a control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. A control unit (130, 140) for controlling motion of a vehicle (100) through real-time kinematic, RTK, positioning, wherein the control unit is comprising:

a vehicle state interface (225) configured to receive vehicle state information from one or more vehicle state sensors (220), including kinematic parameters from one or more RTK receivers on the vehicle and information about availability of RTK correction data (185),
a memory (230) configured to store at least one nominal operational design domain, ODD, for the vehicle, and for each stored nominal ODD, a corresponding RTK-enhanced ODD,
wherein each nominal ODD is associated with greater safety margins relative to its respective RTK-enhanced ODD, and
wherein the control unit (130, 140) is configured to select an active operational design domain, ODD, based on the availability of RTK correction data (185), wherein an RTK-enhanced ODD is selected upon availability of RTK correction data (185), and a nominal ODD is selected otherwise, and
wherein the control unit (130, 140) is configured to operate the vehicle using the kinematic parameters in accordance with the active ODD.

2. The control unit (130, 140) of claim 1, further configured to detect driving anomalies using the received kinematic parameters from the RTK receivers, and to respond to the detected driving anomalies by sending control commands to one or several motion support devices (210A, 210B, 210C, 210D, 210E, 210F).

3. The control unit (130, 140) of any of claims 1 and 2, wherein the received kinematic parameters comprises kinematic parameters from a first and a second RTK receiver (RTK1, RTK2).

4. The control unit (130, 140) of claim 3, wherein the first RTK receiver is positioned closer to the front of the vehicle relative to the second RTK receiver.

5. The control unit (130, 140) of claims 3 and 4, wherein the received kinematic parameters further comprises kinematic parameters from a third and a fourth RTK receiver, and wherein the first, second, third, and fourth RTK receivers (RTK1, RTK2, RTK3, RTK4) are positioned in each corner of the vehicle, with an RTK receiver at each corner.

6. The control unit (130, 140) of claims 3-5, further configured to determine positional accuracy by comparing the relative positions of the RTK receivers to the relative positions obtained from the received kinematic parameters.

7. The control unit (130, 140) of any of the preceding claims, further configured to automatically switch between the nominal and the RTK-enhanced ODD based on the availability of RTK correction data (185), wherein the switch is triggered by a change in the availability of RTK correction data (185).

8. A vehicle (100), comprising:

a first real-time kinematic, RTK, receiver (RTK1) configured to receive a plurality of satellite signals (195),
a correction data receiver (RTK1) configured to determine the availability of RTK correction data (185), and receive, upon availability, RTK correction data from a base station (180),
a digital signal processor, DSP, configured to determine kinematic parameters from the received satellite signals (195) and, upon availability, the RTK correction data (185), and a control unit (130, 140) according to any of claims 1 and 2.

9. The vehicle (100) of claim 8, further comprising a second RTK receiver (RTK2) configured to receive a plurality of satellite signals (195), and a control unit according to any of claims 3 and 4.

10. The vehicle (100) of claim 9, comprising a third and a fourth RTK receiver (RTK3, RTK4) configured to receive a plurality of satellite signals (195), and a control unit (130, 140) according to any of claims 5-7.

11. A method for controlling motion by a vehicle (100) through real-time kinematic, RTK, positioning, the method comprising:

defining (S1) at least one nominal operational design domain, ODD, for the vehicle, and for each nominal ODD, defining a corresponding RTK-enhanced ODD, wherein each nominal ODD is associated with greater safety margins relative to its respective RTK-enhanced ODD,
receiving (S2) a plurality of satellite signals (195) at a first RTK receiver (RTK1) on the vehicle (100), receiving (S3) RTK correction data (185) from a base station (180) in case RTK correction data (185) is available,
determining (S4) kinematic parameters from the received satellite signals (195) and, upon availability, the RTK correction data (185),
selecting (S5) an active ODD based on the availability of RTK correction data (185), wherein the RTK-enhanced ODD is selected upon availability of RTK correction data (185), and a nominal ODD is selected otherwise, and
operating (S6) the vehicle using the kinematic parameters in accordance with the active ODD.

12. The method of claim 11, further comprising detecting (S7) driving anomalies using the kinematic parameters and responding (S8) to the detected driving anomalies by sending control commands to one or several motion support devices (210A, 210B, 210C, 210D, 210E, 210F).

13. The method of any of claims 11 and 12, wherein the vehicle comprises a second RTK receiver (RTK2) and receiving (S2) further comprises receiving a plurality of satellite signals (195) at the second RTK receiver (RTK2) on the vehicle (100).

14. The method of claim 13, wherein the first RTK receiver is arranged to be positioned closer to the front of the vehicle relative to the second RTK receiver.

15. The method of any of claims 13 and 14, wherein the vehicle comprises a third and a fourth RTK receiver (RTK3, RTK4) and receiving (S2) further comprises receiving a plurality of satellite signals (195) at the third and fourth RTK receivers (RTK3, RTK4), and wherein the first, second, third, and fourth RTK receivers (RTK1, RTK2, RTK3, RTK4) are positioned in each corner of the vehicle, with an RTK receiver at each corner.

16. The method of any of claims 13-15, further comprising determining (S9) positional accuracy metric by comparing the relative positions of the RTK receivers to the determined relative positions obtained from the received satellite signals and, upon availability, the RTK correction data (185).

17. The method of any of claims 11-16, wherein selecting (S5) further involves automatically switching between the nominal and the RTK-enhanced ODD based on the availability of RTK correction data (185), and wherein switching is triggered by a change in the availability of RTK correction data (185).

18. The method of any of claims 11-17, wherein determining (S4) kinematic parameters from the received satellite signals comprises: determining an approximate position of the vehicle, monitoring phase of the plurality of satellite signals over a time period and determining a three-dimensional velocity of the vehicle based on a change in the monitored phases over the time period.

19. A computer program (550) comprising program code means for performing the steps of any of claims 11-18 when said program is run on a computer or on processing circuitry (510) of a control unit (130, 140).

20. A computer readable medium (560) carrying a computer program (570) comprising program code means for performing the steps of any of claims 11-18 when said program product is run on a computer or on processing circuitry (510) of a control unit (130, 140).

**Patentansprüche**

1. Steuereinheit (130, 140) zum Steuern einer Bewegung eines Fahrzeugs (100) durch Positionieren mit Echtzeit-Kinematik (RTK), die Steuereinheit umfassend:

> eine Fahrzeugzustandsschnittstelle (225), die konfiguriert ist, um Fahrzeugzustandsinformationen von einem oder mehreren Fahrzeugzustandssensoren (220) zu empfangen, einschließlich kinematischer Parameter von einem oder mehreren RTK-Empfängern an dem Fahrzeug, und Informationen über eine Verfügbarkeit von RTK-Korrekturdaten (185),
> einen Speicher (230), der konfiguriert ist, um mindestens eine nominale betriebliche Konstruktionsdomäne, ODD, für das Fahrzeug und für jede gespeicherte nominale ODD eine entsprechende RTK-erweiterte ODD zu speichern, wobei jede nominale ODD in Bezug auf ihre jeweilige RTK-erweiterte ODD mit größeren Sicherheitsmargen assoziiert ist, und
> wobei die Steuereinheit (130, 140) konfiguriert ist, um eine aktive betriebliche Konstruktionsdomäne, ODD, basierend auf der Verfügbarkeit von RTK-Korrekturdaten (185) auszuwählen, wobei bei Verfügbarkeit von RTK-Korrekturdaten (185) eine RTK-erweiterte ODD und andernfalls eine nominale ODD ausgewählt wird, und wobei die Steuereinheit (130, 140) konfiguriert ist, um das Fahrzeug unter Verwendung der kinematischen Parameter gemäß der aktiven ODD zu betreiben.

2. Steuereinheit (130, 140) nach Anspruch 1, die ferner konfiguriert ist, um Fahranomalien unter Verwendung der von den RTK-Empfängern empfangenen kinematischen Parameter zu erkennen und auf die erkannten Fahranomalien zu reagieren, indem sie Steuerbefehle an eine oder mehrere Bewegungsunterstützungsvorrichtungen (210A, 210B, 210C, 210D, 210E, 210F) sendet.

3. Steuereinheit (130, 140) nach einem der Ansprüche 1 und 2, wobei die empfangenen kinematischen Parameter kinematische Parameter von einem ersten und einem zweiten RTK-Empfänger (RTK1, RTK2) umfassen.

4. Steuereinheit (130, 140) nach Anspruch 3, wobei der erste RTK-Empfänger in Bezug auf den zweiten RTK-Empfänger näher an der Vorderseite des Fahrzeugs positioniert ist.

5. Steuereinheit (130, 140) nach Anspruch 3 und 4, wobei die empfangenen kinematischen Parameter ferner kinematische Parameter von einem dritten und einem vierten RTK-Empfänger umfassen, und wobei der erste, der zweite, der dritte und der vierte RTK-Empfänger (RTK1, RTK2, RTK3, RTK4) in jeder Ecke des Fahrzeugs positioniert sind, wobei an jeder Ecke ein RTK-Empfänger ist.

6. Steuereinheit (130, 140) nach einem der Ansprüche 3 bis 5, die ferner konfiguriert ist, um eine Positionsgenauigkeit durch Vergleichen der relativen Positionen der RTK-Empfänger mit den aus den empfangenen kinematischen Parametern erlangten relativen Positionen zu bestimmen.

7. Steuereinheit (130, 140) nach einem der vorherigen Ansprüche, die ferner konfiguriert ist, um automatisch zwischen der nominalen und der RTK-erweiterten ODD basierend auf der der Verfügbarkeit von RTK-Korrekturdaten (185) umzuschalten, wobei das Umschalten durch eine Änderung der Verfügbarkeit von RTK-Korrekturdaten (185) ausgelöst wird.

8. Fahrzeug (100), umfassend:

einen ersten Echtzeit-Kinematik(RTK)-Empfänger (RTK1), der konfiguriert ist, um eine Vielzahl von Satellitensignalen (195) zu empfangen, einen Korrekturdatenempfänger (RTK1), der konfiguriert ist, um die Verfügbarkeit von RTK-Korrekturdaten (185) zu bestimmen und bei Verfügbarkeit RTK-Korrekturdaten von einer Basisstation (180) zu empfangen, einen digitalen Signalprozessor (DSP), der konfiguriert ist, um kinematische Parameter aus den empfangenen Satellitensignalen (195) und, bei Verfügbarkeit, den RTK-Korrekturdaten (185) zu bestimmen, und eine Steuereinheit (130, 140) nach einem der Ansprüche 1 und 2.

9. Fahrzeug (100) nach Anspruch 8, ferner umfassend einen zweiten RTK-Empfänger (RTK2), der konfiguriert ist, um eine Vielzahl von Satellitensignalen (195) zu empfangen, und eine Steuereinheit nach einem der Ansprüche 3 und 4.

10. Fahrzeug (100) nach Anspruch 9, umfassend einen dritten und einen vierten RTK-Empfänger (RTK3, RTK4), die konfiguriert sind, um eine Vielzahl von Satellitensignalen (195) zu empfangen, und eine Steuereinheit (130, 140) nach einem der Ansprüche 5 bis 7.

11. Verfahren zum Steuern einer Bewegung durch ein Fahrzeug (100) durch Positionieren mit Echtzeit-Kinematik (RTK), das Verfahren umfassend:

Definieren (S1) mindestens einer nominalen betrieblichen Konstruktionsdomäne, ODD, für das Fahrzeug und für jede nominale ODD, Definieren einer entsprechenden RTK-erweiterten ODD, wobei jede nominale ODD mit größeren Sicherheitsmargen in Bezug auf ihre jeweilige RTK-erweiterte ODD assoziiert sind, Empfangen (S2) einer Vielzahl von Satellitensignalen (195) an einem ersten RTK-Empfänger (RTK1) an dem Fahrzeug (100), Empfangen (S3) von RTK-Korrekturdaten (185) von einer Basisstation (180), falls RTK-Korrekturdaten (185) verfügbar sind, Bestimmen (S4) kinematischer Parameter aus den empfangenen Satellitensignalen (195) und, bei Verfügbarkeit, aus den RTK-Korrekturdaten (185), Auswählen (S5) einer aktiven ODD basierend auf der Verfügbarkeit von RTK-Korrekturdaten (185), wobei bei Verfügbarkeit von RTK-Korrekturdaten (185) die RTK-erweiterte ODD ausgewählt wird und andernfalls eine nominale ODD ausgewählt wird, und Betreiben (S6) des Fahrzeugs unter Verwendung der kinematischen Parameter gemäß der aktiven ODD.

12. Verfahren nach Anspruch 11, ferner umfassend ein Erkennen (S7) von Fahranomalien unter Verwendung der kinematischen Parameter und Reagieren (S8) auf die erkannten Fahranomalien durch Senden von Steuerbefehlen an eine oder mehrere Bewegungsunterstützungsvorrichtungen (210A, 210B, 210C, 210D, 210E, 210F).

13. Verfahren nach einem der Ansprüche 11 und 12,

wobei das Fahrzeug einen zweiten RTK-Empfänger (RTK2) umfasst und ein Empfangen (S2) ferner ein Empfangen einer Vielzahl von Satellitensignalen (195) an dem zweiten RTK-Empfänger (RTK2) an dem Fahrzeug (100) umfasst.

14. Verfahren nach Anspruch 13, wobei der erste RTK-Empfänger angeordnet ist, um näher an der Vorderseite des Fahrzeugs als der zweite RTK-Empfänger positioniert zu sein.

15. Verfahren nach einem der Ansprüche 13 und 14, wobei das Fahrzeug einen dritten und einen vierten RTK-Empfänger (RTK3, RTK4) umfasst und ein Empfangen (S2) ferner ein Empfangen einer Vielzahl von Satellitensignalen (195) an dem dritten und dem vierten RTK-Empfänger (RTK3, RTK4) umfasst, und wobei der erste, der zweite, der dritte und der vierte RTK-Empfänger (RTK1, RTK2, RTK3, RTK4) in jeder Ecke des Fahrzeugs positioniert sind, wobei an jeder Ecke ein RTK-Empfänger ist.

16. Verfahren nach einem der Ansprüche 13 bis 15, ferner umfassend ein Bestimmen (S9) von Positionsgenauigkeitsmetrik durch Vergleichen der relativen Positionen der RTK-Empfänger mit den bestimmten relativen Positionen, die aus den empfangenen Satellitensignalen und, bei Verfügbarkeit, den RTK-Korrekturdaten (185) erlangt werden.

17. Verfahren nach einem der Ansprüche 11 bis 16, wobei ein Auswählen (S5) ferner ein automatisches Umschalten zwischen dem nominalen und der RTK-erweiterten ODD basierend auf der der Verfügbarkeit von RTK-Korrekturdaten (185) beinhaltet, und wobei ein Umschalten durch eine Änderung der Verfügbarkeit von RTK-Korrekturdaten (185) ausgelöst wird.

18. Verfahren nach einem der Ansprüche 11 bis 17, wobei ein Bestimmen (S4) kinematischer Parameter aus den empfangenen Satellitensignalen Folgendes umfasst:
Bestimmen einer ungefähren Position des Fahrzeugs, Überwachen einer Phase der Vielzahl von Satellitensignalen über einen Zeitraum und Bestimmen einer dreidimensionalen Geschwindigkeit des Fahrzeugs basierend einer Änderung der überwachten Phasen über den Zeitraum.

19. Computerprogramm (550), umfassend Programmcodeeinrichtungen zum Durchführen der Schritte nach einem der Ansprüche 11 bis 18, wenn das Programm auf einem Computer oder auf einer Verarbeitungsschaltung (510) einer Steuereinheit (130, 140) ausgeführt wird.

20. Computerlesbares Medium (560), das ein Computerprogramm (570) trägt, umfassend Programmcodeeinrichtungen zum Durchführen der Schritte nach einem der Ansprüche 11 bis 18, wenn das Programmprodukt auf einem Computer oder auf einer Verarbeitungsschaltung (510) einer Steuereinheit (130, 140) ausgeführt wird.

**Revendications**

1. Unité de commande (130, 140) pour commander le mouvement d'un véhicule (100) par un positionnement cinématique en temps réel (RTK), dans laquelle l'unité de commande comprend :

une interface d'état de véhicule (225) configurée pour recevoir des informations sur l'état du véhicule provenant d'un ou de plusieurs capteurs d'état de véhicule (220), y compris des paramètres cinématiques provenant d'un ou de plusieurs récepteurs RTK sur le véhicule et des informations sur la disponibilité des données de correction RTK (185),
une mémoire (230) configurée pour stocker au moins un domaine de conception opérationnelle, ODD, nominal pour le véhicule, et pour chaque ODD nominal stocké, un ODD correspondant amélioré par RTK, dans laquelle chaque ODD nominal est associé à des marges de sécurité plus importantes par rapport à son ODD respectif amélioré par RTK, et
dans laquelle l'unité de commande (130, 140) est configurée pour sélectionner un domaine de conception opérationnelle, ODD, actif en fonction de la disponibilité de données de correction RTK (185), dans laquelle un ODD amélioré par RTK est sélectionné lorsque des données de correction RTK (185) sont disponibles, et un ODD nominal est sélectionné dans le cas contraire, et
dans laquelle l'unité de commande (130, 140) est configurée pour faire fonctionner le véhicule à l'aide des paramètres cinématiques selon l'ODD actif.

2. Unité de commande (130, 140) selon la revendication 1, configurée en outre pour détecter des anomalies de conduite à l'aide des paramètres cinématiques reçus des récepteurs RTK, et pour répondre aux anomalies
de conduite détectées en envoyant des instructions de commande à un ou plusieurs dispositifs d'assistance au mouvement (210A, 210B, 210C, 210D, 210E, 210F).

3. Unité de commande (130, 140) selon l'une quelconque des revendications 1 et 2, dans laquelle les paramètres cinématiques reçus comprennent des paramètres cinématiques provenant d'un premier et d'un deuxième récepteur RTK (RTK1, RTK2).

4. Unité de commande (130, 140) selon la revendication 3, dans laquelle le premier récepteur RTK est positionné plus près de l'avant du véhicule comparé au deuxième récepteur RTK.

5. Unité de commande (130, 140) selon les revendications 3 et 4, dans laquelle les paramètres cinématiques reçus comprennent en outre des paramètres cinématiques provenant d'un troisième et d'un quatrième récepteur RTK, et dans laquelle les premier, deuxième, troisième et quatrième récepteurs RTK (RTK1, RTK2, RTK3, RTK4) sont positionnés à chaque coin du véhicule, avec un récepteur RTK à chaque coin.

**6.** Unité de commande (130, 140) selon les revendications 3 à 5, configurée en outre pour déterminer la précision de positionnement en comparant les positions relatives des récepteurs RTK aux positions relatives obtenues à partir des paramètres cinématiques reçus.

**7.** Unité de commande (130, 140) selon l'une quelconque des revendications précédentes, configurée en outre pour commuter automatiquement entre l'ODD nominal et l'ODD amélioré par RTK en fonction de la disponibilité de données de correction RTK (185), dans laquelle la commutation est déclenchée par un changement de disponibilité des données de correction RTK (185).

**8.** Véhicule (100), comprenant :

un premier récepteur cinématique en temps réel, RTK, (RTK1) configuré pour recevoir une pluralité de signaux satellite (195), un récepteur de données de correction (RTK1) configuré pour déterminer la disponibilité des données de correction RTK (185) et recevoir, lorsqu'elles sont disponibles, les données de correction RTK d'une station de base (180), un processeur de signaux numériques (DSP) configuré pour déterminer les paramètres cinématiques à partir des signaux satellite reçus (195) et, lorsqu'elles sont disponibles, des données de correction RTK (185), et une unité de commande (130, 140) selon l'une quelconque des revendications 1 et 2.

**9.** Véhicule (100) selon la revendication 8, comprenant en outre un deuxième récepteur RTK (RTK2) configuré pour recevoir une pluralité de signaux satellite (195), et une unité de commande selon l'une quelconque des revendications 3 et 4.

**10.** Véhicule (100) selon la revendication 9, comprenant un troisième et un quatrième récepteur RTK (RTK3, RTK4) configurés pour recevoir une pluralité de signaux satellite (195), et une unité de commande (130, 140) selon l'une quelconque des revendications 5 à 7.

**11.** Procédé de commande de mouvement par un véhicule (100) par positionnement cinématique en temps réel (RTK), le procédé comprenant :

la définition (S1) d'au moins un domaine de conception opérationnelle, ODD, nominal pour le véhicule, et pour chaque ODD nominal, la définition d'un ODD correspondant amélioré par RTK, dans lequel chaque ODD nominal est associé à des marges de sécurité plus importantes par rapport à son ODD respectif amélioré par RTK, la réception (S2) d'une pluralité de signaux satellite (195) au niveau d'un premier récepteur RTK (RTK1) sur le véhicule (100), la réception (S3) de données de correction RTK (185) d'une station de base (180) si les données de correction RTK (185) sont disponibles, la détermination (S4) de paramètres cinématiques à partir des signaux satellite (195) reçus et, si elles sont disponibles, des données de correction RTK (185), la sélection (S5) d'un ODD actif en fonction de la disponibilité des données de correction RTK (185), dans lequel l'ODD amélioré par RTK est sélectionné lorsque des données de correction RTK (185) sont disponibles, et la sélection d'un ODD nominal dans le cas contraire, et l'utilisation (S6) du véhicule à l'aide des paramètres cinématiques selon l'ODD actif.

**12.** Procédé selon la revendication 11, comprenant en outre la détection (S7) d'anomalies de conduite à l'aide des paramètres cinématiques et la réponse (S8) aux anomalies de conduite détectées par l'envoi d'instructions de commande à un ou plusieurs dispositifs d'assistance au mouvement (210A, 210B, 210C, 210D, 210E, 210F).

**13.** Procédé selon l'une quelconque des revendications 11 et 12,

dans lequel le véhicule comprend un deuxième récepteur RTK (RTK2) et la réception (S2) comprend en outre la réception d'une pluralité de signaux satellite (195) au niveau du deuxième récepteur RTK (RTK2) sur le véhicule (100).

**14.** Procédé selon la revendication 13, dans lequel le premier récepteur RTK est agencé pour être positionné plus près de l'avant du véhicule comparé au deuxième récepteur RTK.

**15.** Procédé selon l'une quelconque des revendications 13 et 14, dans lequel le véhicule comprend un troisième et un quatrième récepteur RTK (RTK3, RTK4) et la réception (S2) comprend en outre la réception d'une pluralité de signaux satellite (195) au niveau des troisième et quatrième récepteurs RTK (RTK3, RTK4), et dans lequel les premier, deuxième, troisième et quatrième récepteurs RTK (RTK1, RTK2, RTK3, RTK4) sont positionnés à chaque coin du véhicule, avec un récepteur RTK à chaque coin.

**16.** Procédé selon l'une quelconque des revendications 13 à 15,

comprenant en outre la détermination (S9) de la mesure de

précision de positionnement en comparant les positions relatives des récepteurs RTK aux positions relatives déterminées obtenues à partir des signaux satellite reçus et, si elles sont disponibles, des données de correction RTK (185).

17. Procédé selon l'une quelconque des revendications 11 à 16, dans lequel la sélection (S5) implique en outre une commutation automatique entre l'ODD nominal et l'ODD amélioré par RTK en fonction de la disponibilité de données de correction RTK (185), et dans lequel la commutation est déclenchée par un changement de disponibilité des données de correction RTK (185).

18. Procédé selon l'une quelconque des revendications 11 à 17, dans lequel la détermination (S4) des paramètres cinématiques à partir des signaux satellite reçus comprend : la détermination d'une position approximative du véhicule, la surveillance de la phase de la pluralité de signaux satellite pendant une certaine période et la détermination d'une vitesse tridimensionnelle du véhicule sur la base d'un changement dans les phases surveillées pendant cette période.

19. Programme informatique (550) comprenant des moyens de code de programme pour exécuter les étapes selon l'une quelconque des revendications 11 à 18 lorsque ledit programme est exécuté sur un ordinateur ou sur un circuit de traitement (510) d'une unité de commande (130, 140).

20. Support lisible par ordinateur (560) contenant un programme informatique (570) comprenant des moyens de code de programme pour exécuter les étapes selon l'une quelconque des revendications 11 à 18 lorsque ledit produit de programme est exécuté sur un ordinateur ou sur un circuit de traitement (510) d'une unité de commande (130, 140).

FIG. 1

FIG. 2

RTK2

RTK4

RTK1

RTK3

100

FIG. 3B

RTK2

RTK1

100

FIG. 3A

```
┌─────────────────────────────────┐
│         DEFINING (S1)           │
└─────────────────────────────────┘
                 │
                 ▼
┌─────────────────────────────────┐
│  RECEIVING (S2) SATELLITE SIGNALS│
└─────────────────────────────────┘
                 │
                 ▼
┌─────────────────────────────────┐
│ RECEIVING (S3) RTK CORRECTION DATA│
└─────────────────────────────────┘
                 │
                 ▼
┌─────────────────────────────────┐
│ DETERMINING (S4) KINEMATIC PARAMETERS│
└─────────────────────────────────┘
                 │
                 ▼
┌─────────────────────────────────┐
│     SELECTING (S5) ACTIVE ODD   │
└─────────────────────────────────┘
                 │
                 ▼
┌─────────────────────────────────┐
│         OPERATING (S6)          │
└─────────────────────────────────┘
```

FIG. 4

EP 4 538 140 B1

FIG. 5A

FIG. 5B

EP 4 538 140 B1

FIG. 6

**EP 4 538 140 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021184320 A1
- CN 114715166 A
- CN 115416675 A